# EUROPÄISCHE PATENTSCHRIFT

(11) **EP 3 033 200 B1**
(45) Veröffentlichungstag und Bekanntmachung des Hinweises auf die Patenterteilung: **09.10.2019**
(21) Anmeldenummer: 14750509.3
(22) Anmeldetag: 13.08.2014
(51) Int. Cl.: B23P 23/04, B23P 6/00, B23K 26/342, B23K 26/32, B23K 26/08

(54) **BEARBEITUNGSMASCHINE UND VERFAHREN ZUM WIEDERHERSTELLEN EINER GEBRAUCHTEN TURBINENSCHAUFEL, EINES GEBRAUCHTEN IMPELLERS ODER EINES GEBRAUCHTEN BLISKS**
PROCESSING MACHINE AND METHOD FOR RESTORING A USED TURBINE BLADE, A USED IMPELLER OR A USED BLISK
MACHINE D'USINAGE ET PROCÉDÉ PERMETTANT DE REMETTRE EN ÉTAT UNE AUBE DE TURBINE USAGÉE, UNE ROUE À AUBES USAGÉE OU UN DISQUE AUBAGÉ MONOBLOC USAGÉ

(30) Priorität: 13.08.2013 DE 102013108761
(43) Veröffentlichungstag der Anmeldung: 22.06.2016
(73) Patentinhaber: HAMUEL Maschinenbau GmbH & Co. KG, 96484 Meeder b. Coburg (DE); Hybrid Manufacturing Technologies, Sutton Coldfield, West Midlands B76 9QW (GB)
(72) Erfinder: STANIK, Markus, 96484 Meeder b. Coburg (DE); BERTZICK, Rico, 96484 Meeder b. Coburg (DE); COATES, Peter, West Midlands B76 9QW (GB); JONES, Jason, West Midlands B76 9QW (GB)
(74) Vertreter: Schmitt-Nilson Schraud Waibel Wohlfrom Patentanwälte Partnerschaft mbB
(86) Internationale Anmeldenummer: PCT/EP2014/067341
(87) Internationale Veröffentlichungsnummer: WO 2015/022369

(56) Entgegenhaltungen:
- EP-A1- 1 614 497
- EP-A2- 1 859 892
- WO-A1-03/064089
- DE-A1-102006 059 227
- JP-A- H11 114 741
- US-A1- 2004 083 024
- US-A1- 2008 173 624

## Beschreibung

Die vorliegende Erfindung betrifft eine Bearbeitungsmaschine sowie ein Verfahren für eine Turbinenschaufel, einen Impeller oder einen Blisk gemäß den Oberbegriffen der Ansprüche 1 und 7.

Turbinenschaufeln, wie sie in Kraftwerken für die Energieerzeugung oder in Flugzeugtriebwerken zum Einsatz kommen, können eine Länge von Schaufelfuß bis Schaufelkopf von bis zu 2600 mm aufweisen. Ihr Profil muss den vorgegebenen Anforderungen sehr präzise entsprechen. Da Turbinenschaufeln im täglichen Einsatz erheblichen Belastungen ausgesetzt sind, nutzen sie sich mit der Zeit ab, und ihr Profil erfährt ungewollte Veränderungen.

Derzeit werden schadhafte Turbinenschaufeln häufig einfach außer Betrieb gestellt. Eine Reparatur und Wiederherstellung erfolgt in vielen Fällen gar nicht, sondern es wird einfach eine neue Turbinenschaufel hergestellt. In anderen Fällen, bei denen eine Reparatur und Wiederherstellung von geschädigten oder mangelhaften Turbinenschaufeln durchgeführt wird, gestaltet sich diese sehr aufwändig.

Aus der DE 10 2006 059 227 A1 ist ein Verfahren zur Rundumbearbeitung eines Rohlings mit einer Bearbeitungsmaschine, wie z.B. einer Drehfräsmaschine und im Besonderen eine Bearbeitungsmaschine bzw. ein Verfahren gemäß den Oberbegriffen der Ansprüche 1 und 7 bekannt. Dabei wird der Rohling in einem Bearbeitungsschritt von wenigstens einem Spannmittel gehalten. Von der Bearbeitungsmaschine, insbesondere der Drehfräsmaschine können alle Funktionsflächen des Werkstücks, insbesondere der Umfang und beide Stirnflächen des Rohlings in die endgültige, der bestimmungsgemäßen Verwendung entsprechende Gesamtform gebracht werden. Ein Materialauftrag ist dort nicht offenbart.

Aus der EP 1 614 497 A1 ist ein Verfahren und eine Vorrichtung zum Reparieren oder zum Aufbau von Oberflächen auf einem Werkstück bekannt, während das Werkstück auf einer Haltevorrichtung angebracht ist. Eine Rundumbearbeitung des Werkstücks ist dort nicht möglich.

Es ist daher eine Aufgabe der vorliegenden Erfindung, eine Bearbeitungsmaschine sowie ein Verfahren zum Wiederherstellen von gebrauchten Bauteilen, insbesondere Turbinenschaufeln, Impellern oder Blisks bereitzustellen, mit denen eine Wiederherstellung von solchen Bauteilen ermöglicht wird. Dies soll nach Möglichkeit einfach und kostengünstig erfolgen, ohne dass das wiederherzustellende Bauteil zwischen unterschiedlichen Maschinen transportiert und verbracht werden muss.

Diese Aufgabe wird durch den Gegenstand der unabhängigen Ansprüche gelöst. Vorteilhafte Weiterbildungen ergeben sich aus den abhängigen Ansprüchen.

Die vorliegende Patentanmeldung betrifft eine erfindungsgemäße Bearbeitungsmaschine zum Wiederherstellen einer gebrauchten Turbinenschaufel, eines gebrauchten Impellers oder eines gebrauchten Blisks, wie in Patentanspruch 1 definiert.

Diese weist die folgenden Merkmale auf:
zwei sich gegenüberliegende Handhabungseinheiten mit Halteelementen für ein dazwischen positioniertes Bauteil;
eine bewegbare Bearbeitungseinheit mit einer Werkzeugkopfaufnahmeeinheit, die so ausgebildet ist, dass ein Fräskopf zur spanenden Bearbeitung des Bauteils an der Werkzeugkopfaufnahmeeinheit andockbar ist und dass ein Laserschweißkopf zum Laserauftrags-Schweißen auf das Bauteil an der Werkzeugkopfaufnahmeeinheit andockbar ist, so dass Material an Stellen des Bauteils aufbringbar ist, an denen Material fehlt,
wobei die bewegbare Bearbeitungseinheit folgende Elemente aufweist:
   eine Y-Grundschlitteneinheit, die gegenüber einem Maschinengrundgestell entlang einer Y-Achse verfahrbar ist,
   eine Z-Grundschlitteneinheit, die gegenüber der Y-Grundschlitteneinheit entlang einer Z-Achse verfahrbar ist, und
   wobei die Werkzeugkopfaufnahmeeinheit an der Z-Grundschlitteneinheit drehbar gelagert und um eine B-Achse rotierbar ausgebildet ist, die parallel zur Y-Achse der Y-Grundschlitteneinheit liegt.

Bei solchen erfindungsgemäß wiederherzustellenden Bauteilen kann es sich insbesondere um schwere Bauteile, insbesondere schwere Turbinen-Bauteile handeln. Unter schwer wird daher erfindungsgemäß eine Masse von mehr als 50kg verstanden.

Selbstverständlich können solche erfindungsgemäß wiederherzustellende Bauteile auch leichter sein.

Bei dem Grundmaterial solcher erfindungsgemäß wiederherzustellender Bauteile kann es sich um rostfreien Stahl, um Titan, um Metall auf Nickelbasis, um eine korrosionsbeständige Nickelbasislegierung oder eine Superlegierung handeln.

Ebenso kann es sich bei dem durch Laserauftragsschweißen aufzutragendem Material um rostfreien Stahl, um Titan, um Metall auf Nickelbasis, um eine korrosionsbeständige Nickelbasislegierung oder eine Superlegierung handeln.

Das durch Laserauftragsschweißen aufzutragende Material kann mit dem Grundmaterial des erfindungsgemäß wiederherzustellenden Bauteils übereinstimmen.

Alternativ dazu kann das durch Laserauftragsschweißen aufzutragende Material auch ein Material sein, das dem Grundmaterial des erfindungsgemäß wiederherzustellenden Bauteils ähnlich ist. Dadurch können teilweise bessere Verbindungen erreicht werden.

Mit einer erfindungsgemäßen Bearbeitungsmaschine ist eine Rundum-Bearbeitung des wiederherzustellenden Bauteils über den gesamten Umfang und die ganze Länge möglich. Bei einer wiederherzustellenden Turbinenschaufel kann diese über ihren ganzen Umfang und ihre ganze Länge, von Schaufelfuß und Schaufelblatt bis zum Schaufelkopf bearbeitet werden. Bei einem Impeller oder einem Blisk ist es ebenso.

Gemäß einer Grundidee der vorliegenden Erfindung verfügt eine erfindungsgemäße Bearbeitungsmaschine sowohl über einen Fräskopf, der zur spanenden Bearbeitung des Bauteils an ihr andockbar ist und mithilfe dessen Material an Stellen, an denen zu viel Material vorhanden ist, abgenommen werden kann, als auch über einen Laserschweißkopf zum Laserauftragsschweißen auf das Bauteil, der an der Bearbeitungseinheit andockbar ist, sodass Material an Stellen des Bauteils aufgebracht werden kann, an denen Material fehlt. Es wird also ein Abtragen von Material durch den Fräskopf und ein Auftragen von Material durch den Laserschweißkopf durch die gleiche Bearbeitungsmaschine ermöglicht, und das Bauteil kann in der gleichen, zwischen den sich gegenüberliegenden, drehbaren Handhabungseinheiten mit Halte-Elementen eingespannten Position verbleiben, es muss nicht zwischen unterschiedlichen Maschinen hin- und hertransportiert und mehrfach eingespannt werden. Dies gewährleistet ein einfaches und kostengünstiges Wiederherstellen des Bauteils.

Gemäß einer weiteren Grundidee der vorliegenden Erfindung wird es ermöglicht, einen Laserschweißkopf in einer erfindungsgemäßen Bearbeitungsmaschine einzusetzen, indem ein solcher Laserschweißkopf zum einen so klein und so kompakt ausgeführt ist, dass er an der Bearbeitungseinheit angedockt, von dieser abgestützt und betrieben sowie nach Gebrauch wieder abgenommen werden kann und indem ein solcher Laserschweißkopf zum anderen in der angedockten Position an der Bearbeitungseinheit über eine Material- und Laserstrahlzuführeinheit mit aufzutragendem und dem Laserstrahl versorgt werden kann. Der Laserschweißkopf kann somit durch die Bearbeitungseinheit wie ein normaler Fräskopf eingesetzt werden, was früher als undenkbar erschien.

Erfindungsgemäß wiederhergestellte Bauteile können unmittelbar wieder in Betrieb genommen werden, somit wird die Lebensdauer von solchen Bauteilen signifikant verlängert, und mit der Herstellung eines neuen Bauteils verbundenen Kosten können eingespart werden.

Die zwei sich gegenüberliegenden Handhabungseinheiten mit Halteelementen für ein dazwischen positioniertes Bauteil können drehbar ausgebildet sein, müssen es aber nicht.

Die Bearbeitungseinheit der erfindungsgemäßen Bearbeitungsmaschinen umfasst ferner folgende Elemente:
eine Y-Grundschlitteneinheit, die gegenüber einem Maschinengrundgestell entlang einer Y-Achse verfahrbar ist,
eine Z-Grundschlitteneinheit, die gegenüber der Y-Grundschlitteneinheit entlang einer Z-Achse verfahrbar ist,
eine Werkzeugkopfaufnahmeeinheit, die an der Z-Grundschlitteneinheit drehbar gelagert ist, und
eine Material- und Laserstrahlzuführeinheit für den Laserschweißkopf, die eine Laserstrahlquelle und eine optische Führung für den Laserstrahl sowie eine Materialzufuhr beinhaltet und die insbesondere an der drehbaren Werkzeugkopfaufnahmeeinheit oder an der Z-Grundschlitteneinheit angebracht und so ausgebildet ist, dass sie bei angedocktem Zustand des Laserschweißkopfs an die Werkzeugkopfaufnahmeeinheit den Laserschweißkopf mit dem Laserstrahl zum Laserauftragsschweißen und mit dem pulverförmigem Material versorgt.

Mit einer solchen Bearbeitungseinheit kann eine besonders präzise Bearbeitung des Bauteils erfolgen.

Mit einer solchermaßen ausgebildeten Zuführeinheit für den Laserschweißkopf und mit einem solchermaßen ausgebildeten Laserschweißkopf ist der Laserschweißkopf flexibel an die Zuführeinheit ankoppelbar und wieder von dieser abkoppelbar, sodass die Bearbeitungsmaschine nach Bedarf in der Lage ist, Material punktgenau und präzise durch Laserauftragschweißen auf das Bauteil aufzutragen.

An der Schnittstelle zwischen optischer Führung der Zuführeinheit und optischer Führung des Laserschweißkopfs und an der Schnittstelle zwischen Materialzufuhr der Zuführeinheit und Materialzufuhr des Laserschweißkopfs kann eine geeignete Kupplung vorgesehen werden, die im abgedockten Zustand den optischen Pfad und die Materialzufuhr zuverlässig unterbricht und im angedockten Zustand den optischen Pfad und die Materialzufuhr wieder öffnet.

Gemäß einer ersten Ausführungsform der Erfindung ist die bewegbare Bearbeitungseinheit weiterhin so ausgebildet, dass ein Messtaster an ihr andockbar ist, mittels dessen die Ist-Form des wiederherzustellenden Bauteils ermittelbar ist und/oder wobei die bewegbare Bearbeitungseinheit weiterhin so ausgebildet ist, dass ein Polierwerkzeug zum Polieren des Bauteils an ihr andockbar ist.

Durch einen solche Messtaster kann das wiederherzustellende Bauteil zu Beginn oder auch zwischendurch abgefahren werden, um die von dem Messtaster aufgenommenen Positions-Messwerte des Bauteils zu ermitteln, und so kann die Ist-Form des Bauteils ermittelt werden.

Durch das Polierwerkzeug, das insbesondere als Polierbürste ausgebildet sein kann, die ein Keramikmaterial aufweist, kann das Bauteil über dessen gesamten Umfang und dessen gesamte Länge poliert werden, insbesondere nachdem die vorherigen Arbeitsschritte des Wiederherstellens, insbesondere des Fräsens, des Laserauftragschweißens und des optional anschließend durchgeführten Schlichtfräsens abgeschlossen sind. Dadurch ergibt sich eine sehr gute Oberflächenqualität, und das so wiederhergestellte Bauteil kann unmittelbar wieder in Betrieb genommen werden.

Gemäß einer weiteren Ausführungsform umfasst die erfindungsgemäße Bearbeitungsmaschine weiterhin ein Werkzeugmagazin zur Aufnahme wenigstens eines an die Bearbeitungseinheit andockbaren Werkzeugkopfs, insbesondere eines Fräskopfs, eines Laserschweißkopfs, eines Messtasters und eines Polierwerkzeugs, sowie eine Werkzeugwechseleinheit, die so ausgebildet ist, dass der jeweils benötigte Werkzeugkopf aus dem Werkzeugmagazin entnehmbar, zu der Bearbeitungseinheit bewegbar und an dieser andockbar ist und/oder dass der jeweils angedockte Werkzeugkopf nach dessen Gebrauch von der Bearbeitungseinheit abdockbar und aufnehmbar, zu dem Werkzeugmagazin bewegbar und dort ablegbar ist.

Mittels eines solchen Werkzeugmagazins sowie mittels einer solchen Werkzeugwechseleinheit können die jeweils benötigten Werkzeugköpfe nach Bedarf und individuell in die Bearbeitungseinheit ein- und wieder ausgewechselt werden. Bei einer entsprechenden Ausbildung des Werkzeugmagazins und der Werkzeugwechseleinheit kann ein solches Ein- und Auswechseln vollautomatisch erfolgen, was die Betriebskosten für eine solche Bearbeitungsmaschine weiter senkt.

In dem Werkzeugmagazin können insbesondere eine Vielzahl von verschiedenen Werkzeugköpfen, insbesondere verschiedene Arten von Fräsköpfen, von Laserschweißköpfen, von Messtastern und von Polierwerkzeugen vorgehalten werden.

Das Werkzeugmagazin kann dabei insbesondere als drehbares Scheibenmagazin mit einer Vielzahl von an dessen Umfang angeordneten Werkzeugaufnahmeplätzen ausgebildet sein.

Die Werkzeugwechseleinheit kann dabei als Doppelarmgreifer ausgebildet sein, der mittels einer Verfahr- und Handhabeeinrichtung einen Werkzeugkopf aus dem Werkzeugmagazin entnehmen, diese zu der Bearbeitungseinheit bewegen und an dieser andocken kann. Die Bearbeitungseinheit kann dabei insbesondere zu der Werkzeugwechseleinheit hin gedreht werden.

Gemäß einer weiteren Ausführungsform umfasst die erfindungsgemäße Bearbeitungsmaschine weiterhin eine Steuereinheit, die so ausgebildet ist, dass sie aus den von dem Messtaster aufgenommenen Messungen des Bauteils die Ist-Form des Bauteils ermittelt, die Ist-Form des Bauteils mit einer gespeicherten Soll-Form des Bauteils vergleicht, und aus diesem Vergleich Abweichungen ermittelt, insbesondere Bereiche, an denen Material über die Soll-Form hinaus geht und Bereiche, an denen Material fehlt.

Das Ermitteln der Bereiche, an denen Material über die Sollform hinausgeht, und der Bereiche, an denen Material fehlt, kann somit automatisch erfolgen, und die so gewonnenen Erkenntnisse können die Grundlage für die weiteren Verfahrensschritte bilden.

Das Abfahren des Bauteils mit dem Messtaster samt Ermitteln der Ist-Form des Bauteils, das Vergleichen der Ist-Form mit einer gespeicherten Soll-Form und das Ermitteln von Abweichungen aus diesem Vergleich, insbesondere das Ermitteln von Bereichen, an denen Material über die Soll-Form hinausgeht und von Bereichen an, denen Material fehlt, kann ganz zu Beginn der Bearbeitung erfolgen. Ebenso kann dies auch zwischendurch, z. B. nach dem Verfahrensschritt des Laserauftragschweißens wiederholt werden, quasi ein Zwischenergebnis zu ermitteln.

Insbesondere kann die Steuereinheit so ausgebildet sein, dass sie die Bearbeitungseinheit so ansteuert, dass sie unter Verwendung des Fräskopfes an denjenigen Bereichen des Bauteils, an denen das Material über die Soll-Form hinausgeht, Material abträgt, und unter Verwendung des Laserschweißkopfes an denjenigen Bereichen, an denen Material fehlt, Material aufträgt und/oder unter Verwendung des Fräskopfes zu viel aufgetragenes Material wieder abträgt und/oder unter Verwendung des Polierwerkzeugs das Bauteil fertig poliert.

Erfindungsgemäß umfasst die Bearbeitungseinheit der erfindungsgemäßen Bearbeitungsmaschine eine Material- und Laserstrahlzuführeinheit für den Laserschweißkopf, die eine Laserstrahlquelle und eine optische Führung für den Laserstrahl sowie eine Materialzufuhr beinhaltet und die so ausgebildet ist, dass sie bei angedocktem Zustand des Laserschweißkopfs an die Werkzeugkopfaufnahmeeinheit den Laserschweißkopf mit dem Laserstrahl zum Laserauftragsschweißen und mit dem pulverförmigem Material versorgt.

Gemäß einer weiteren Ausführungsform der erfindungsgemäßen Bearbeitungsmaschine verfügen die drehbaren Handhabungseinheiten jeweils über einen Schlitten, sodass sie jeweils entlang einer U-Achse bzw. entlang einer X-Achse entlang eines Maschinengrundgestells verfahrbar sind, und sie sind jeweils um eine parallel zu der U- bzw. X-Achse liegende Rotationsachse C bzw. A drehbar ausgebildet.

Dadurch wird sichergestellt, dass das Bauteil gedreht und durch die Bearbeitungseinheit von allen Seiten bearbeitet werden kann.

Eine solche Bearbeitungsmaschine wird auch als 5-Achs-Bearbeitungsmaschine bezeichnet. Die fünf Achsen sind dabei die X-, Y-, Z-, A- und B-Achsen.

Gemäß einer weiteren Ausführungsform weist der Laserschweißkopf eine an die optische Führung der Zuführeinheit ankoppelbare optische Führung und eine Bearbeitungs- und Fokussier-Optik, insbesondere zum Erzeugen von mehreren, insbesondere kreuzförmigen Laserstrahlen sowie eine an die Materialzufuhr der Zuführeinheit ankoppelbare Materialzufuhr auf. Die Abmessungen des Laserschweißkopfs sind geringer als 80 x 85 x 250 mm.

Ein solcher Laserschweißkopf ist besonders kompakt und handlich ausgebildet und eignet sich besonders gut, um von einer Bearbeitungseinheit aufgenommen und betrieben zu werden.

Die Erfindung betrifft auch ein Verfahren zum Wiederherstellen einer gebrauchten Turbinenschaufel, eines gebrauchten Impellers oder eines gebrauchten Blisks, wie in Patentanspruch 7 definiert.

Dieses weist die folgenden Schritte auf:
Einspannen eines gebrauchten Bauteils zwischen zwei sich gegenüberliegenden Handhabungseinheiten mit Spannelementen;
Andocken eines Fräskopfs an die Werkzeugkopfaufnahmeeinheit einer Bearbeitungseinheit und Sauber-Fräsen des Bauteils, insbesondere derjenigen Bereiche des Bauteils, an denen Material über die Soll-Form heraussteht, unter Bewegen der Handhabungseinheiten und der Bearbeitungseinheit;
Andocken eines Laserschweißkopfs an die Werkzeugkopfaufnahmeeinheit der Bearbeitungseinheit und Auftragen von Material auf das Bauteil durch Laserauftragsschweißen, insbesondere auf diejenigen Bereiche des Bauteils, an denen Material fehlt, unter Bewegen der Handhabungseinheiten und der Bearbeitungseinheit,
wobei die Bearbeitungseinheit bewegt wird, indem eine Y-Grundschlitteneinheit der Bearbeitungseinheit entlang einer Y-Achse gegenüber einem Maschinengrundgestell verfahren wird, indem eine Z-Grundschlitteneinheit der Bearbeitungseinheit gegenüber der Y-Grundschlitteneinheit entlang einer Z-Achse verfahren wird, und indem die Werkzeugkopfaufnahmeeinheit, die an der Z-Grundschlitteneinheit drehbar gelagert ist, um eine B-Achse, die parallel zur Y-Achse der Y-Grundschlitteneinheit liegt, rotiert wird.

Mit einem solchen erfindungsgemäßen Verfahren können gebrauchte Bauteile in einer Aufnahme, ohne dass ein Umspannen des Bauteils erforderlich ist, vollständig wiederhergestellt werden. Dieses Verfahren ist voll automatisierbar und somit einfach und kostengünstig durchführbar. Der komplette Prozess ist reproduzierbar und dokumentierbar. Die oben mit Bezug auf die Bearbeitungsmaschine angegebenen Vorteile und Ausführungsformen treffen gleichermaßen in verfahrensmäßiger Ausgestaltung zu. Diese werden hier nicht noch einmal wiederholt.

Das erfindungsgemäße Verfahren ist vollautomatisiert und daher schnell, reproduzierbar und kostengünstig durchführbar, wenn es weiterhin die Schritte aufweist:
Andocken des Fräskopfs und Abtragen von zu viel aufgetragenem Material; und
Andocken der Poliereinheit und Fertig Polieren des Bauteils.

Dadurch kann evtl. zu viel aufgetragenes Material beim Schweißen auf einfache Weise wieder entfernt werden. Durch die Poliereinheit können die aufgetragenen Bereiche poliert werden, um bessere Oberflächengüten zu erreichen.

Gemäß einer weiteren Ausführungsform umfasst dase erfindungsgemäße Verfahren weiterhin die Schritte
Ermitteln der Ist-Form des Bauteils, insbesondere Andocken eines Messtasters an eine Bearbeitungseinheit und Ermitteln der Ist-Form des Bauteils unter Bewegen der Handhabungseinheiten und/oder der Bearbeitungseinheit;
Vergleichen der Ist-Form des Bauteils mit einer gespeicherten Soll-Form; und
Ermitteln der Abweichung der Ist-Form des Bauteils von einer bekannten Soll-Form, insbesondere von Bereichen, an denen Material über die Soll-Form hinaus geht und von Bereichen, an denen Material fehlt.

Das Ermitteln der Bereiche, an denen Material über die Sollform hinausgeht, und der Bereiche, an denen Material fehlt, kann somit automatisch erfolgen, und die so gewonnenen Erkenntnisse können die Grundlage für die weiteren Verfahrensschritte bilden.

Das Abfahren des Bauteils mit dem Messtaster samt Ermitteln der Ist-Form des Bauteils, das Vergleichen der Ist-Form mit einer gespeicherten Soll-Form und das Ermitteln von Abweichungen aus diesem Vergleich, insbesondere das Ermitteln von Bereichen, an denen Material über die Soll-Form hinausgeht und von Bereichen an, denen Material fehlt, kann ganz zu Beginn der Bearbeitung erfolgen. Ebenso kann dies auch zwischendurch, z. B. nach dem Verfahrensschritt des Laserauftragschweißens wiederholt werden, quasi ein Zwischenergebnis zu ermitteln.

Das erfindungsgemäße Verfahren ist vollautomatisiert und daher schnell, reproduzierbar und kostengünstig durchführbar, wenn es weiterhin die Schritte aufweisen:
Abtragen von Material an denjenigen Bereichen des Bauteils, an denen das Material über die Soll-Form hinausgeht, unter Verwendung des Fräskopfes
Auftragen von Material an denjenigen Bereichen, an denen Material fehlt, unter Verwendung des Laserschweißkopfes, und/oder
Abtragen von zu viel aufgetragenem Material, unter Verwendung des oder eines Fräskopfes Material,
Fertig Polieren des Bauteils, unter Verwendung des Polierwerkzeugs.

Durch ein erneutes Ermitteln der Ist-Form des Bauteils können die Ergebnisse der zuvor durchgeführten Verfahrensschritte, insbesondere der Verfahrensschritte des Fräsens und des Laserauftragschweißens überprüft werden. Abhängig von der erneut ermittelten Ist-Form können dann weitere Verfahrensschritte individuell durchgeführt werden. Z. B. kann, wenn festgestellt wird, dass beim Fräsen zu viel Material abgetragen worden ist, auf die betroffenen Bereiche neues Material durch Laserauftragschweißen aufgetragen werden. In dem Fall, dass beim Laserauftragschweißen zu viel Material aufgetragen worden ist, kann dieses durch einen weiteren Fräs-Verfahrensschritt wieder abgetragen werden. Des Weiteren kann nach den Verfahrensschritten des Sauber-Fräsens und des Laserauftragschweißens durch erneutes Andocken des oder eines Fräskopfes ein Schlicht-Fräsen durchgeführt werden. Ein Polierwerkzeug, insbesondere eine Polierbürste, an die Bearbeitungseinheit angedockt werden, um das Bauteil fertig zu polieren und um eine gute Oberflächenqualität und -beschaffenheit des wiederhergestellten Bauteils zu erreichen.

Gemäß einer weiteren Ausführungsform umfasst das erfindungsgemäße Verfahren weiterhin die Schritte
Bereitstellen eines Werkzeugmagazins zur Aufnahme wenigstens eines an die Bearbeitungseinheit andockbaren Werkzeugkopfs, insbesondere eines Fräskopfs, eines Laserschweißkopfs, eines Messtasters und eines Polierwerkzeugs, sowie
Entnehmen des jeweils benötigten Werkzeugkopfs aus dem Werkzeugmagazin mit der Werkzeugwechseleinheit, Bewegen desselben zu der Bearbeitungseinheit und Andocken desselben an dieser, und/oder Abdocken des jeweils angedockten Werkzeugkopfs nach dessen Gebrauch von der Bearbeitungseinheit, Aufnehmen desselben, Bewegen desselben zu dem Werkzeugmagazin und Ablegen desselben in dem Werkzeugmagazin durch die Werkzeugwechseleinheit.

Die Erfindung ist nachfolgend anhand von Ausführungsbeispielen mit Bezug auf die beiliegenden Figuren näher erläutert.
Fig. 1 zeigt eine perspektivische Ansicht einer ersten Bearbeitungsmaschine mit einer zwischen zwei Handhabungseinheiten eingespannten Turbinenschaufel und mit einer Bearbeitungseinheit, gemäß einem ersten Ausführungsbeispiel der Erfindung;
Fig. 2 zeigt eine perspektivische Ansicht einer zweiten Bearbeitungsmaschine mit zwei Bearbeitungseinheiten ohne dazwischen eingespannter Turbinenschaufel, mit einer Bearbeitungseinheit, mit einem Werkzeugmagazin und mit einer Werkzeugwechseleinheit, gemäß einem weiteren Ausführungsbeispiel der Erfindung;
Fig. 3 zeigt eine Z-Schlitteneinheit und eine rotierbare Werkzeugaufnahmeeinheit der Bearbeitungsmaschine aus Fig. 2, mit einem an der Werkzeugaufnahmeeinheit angedockten Laserschweißkopf und mit einer oberhalb der oberhalb der Z-Schlitteneinheit angeordneten Material- und Laserstrahlzuführeinheit in Parkposition, mit abgenommener Verkleidung;
Fig. 4 zeigt die Z-Schlitteneinheit und die rotierbare Werkzeugaufnahmeeinheit aus Fig. 3, mit an den Laserschweißkopf angedockter Material- und Laserstrahlzuführeinheit, mit abgenommener Verkleidung;
Fig. 5 zeigt eine perspektivische Ansicht einer beschädigten Turbinenschaufel;
Fig. 6 zeigt eine perspektivische Ansicht der Turbinenschaufel aus Fig. 5 nach dem Arbeitsschritt des Sauberfräsens;
Fig. 7 zeigt eine perspektivische Ansicht der Turbinenschaufel aus den Fig. 5 und 6 nach dem Arbeitsschritt des Laserauftragsschweißens; und
Fig. 8 zeigt eine perspektivische Ansicht der Turbinenschaufel aus den Fig. 5 bis 7 nach dem Arbeitsschritt des Schlichtfräsens und des Polierens.

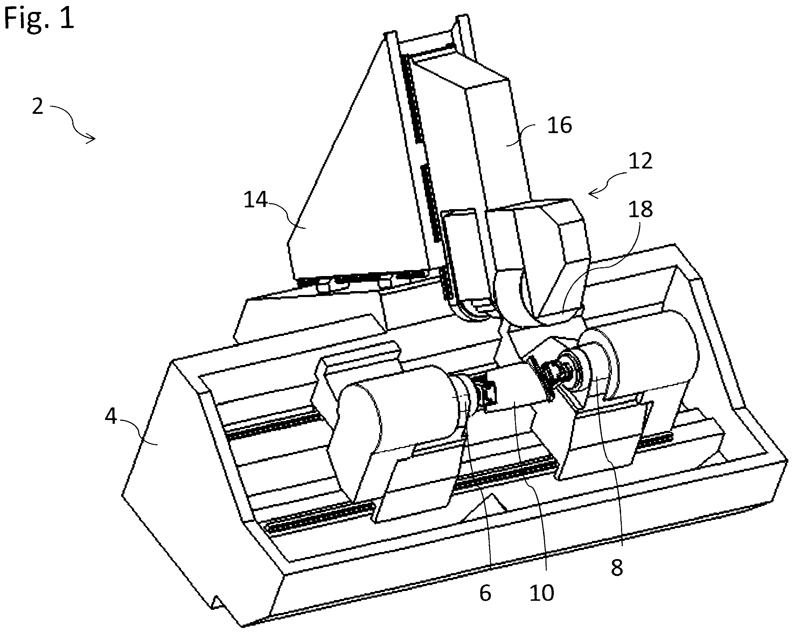

Fig. 1 zeigt eine perspektivische Ansicht einer ersten Bearbeitungsmaschine 2 mit einer zwischen zwei Handhabungseinheiten 6, 8 eingespannten Turbinenschaufel 10 und mit einer Bearbeitungseinheit 12, gemäß einem ersten Ausführungsbeispiel der Erfindung.

Die erste Bearbeitungsmaschine 2 verfügt über ein Maschinengrundgestell 4 mit Schienen in Querrichtung an dessen Oberseite, auf denen eine linke Handhabungseinheit 6 mit Spannelement und eine rechte Handhabungseinheit 8 mit Spannelement mittels entsprechendem Schlitten nach links und nach rechts verschiebbar und in der gewünschten Position arretierbar sind. Diese Verschiebungsrichtung wird auch als X-Richtung bezeichnet.

Die linke und die rechte Handhabungseinheit 6 und 8 verfügen jeweils über zu der anderen Handhabungseinheit hin gerichtete Handhabungsköpfe, die um eine Achse drehbar sind, die im Wesentlichen parallel zu der Quer-Verschieberichtung der Handhabungseinheiten 6 und 8 liegt. Diese Rotationsrichtung wird auch als A-Achse bezeichnet. An den Handhabungsköpfen der Handhabungseinheiten 6 und 8 sind jeweils Spannelemente angebracht, die so ausgebildet sind, dass sie das jeweils zu bearbeitende Bauteil sicher halten können.

Im vorliegenden Ausführungsbeispiel ist zwischen den Spannelementen der linken und der rechten Handhabungseinheit 6 und 8 eine gebrauchte Turbinenschaufel 10 eingespannt.

Die erste Bearbeitungsmaschine 2 verfügt über eine Y-Grundschlitteneinheit 14, die an dem Maschinengrundgestell 4 in Y-Achsrichtung verschiebbar befestigt ist, über eine Z-Grundschlitteneinheit 16, die an der Y-Grundschlitteneinheit 14 in Z-Achsrichtung verschiebbar befestigt ist und über eine an der Z-Grundschlitteneinheit 16 befestigte, um eine B-Achse rotierbare Werkzeugaufnahmeeinheit 18, die nachfolgend noch genauer erläutert wird. Die B-Achse liegt parallel zur Y-Achse der Y-Grundschlitteneinheit 14.

Durch das Verfahren der Bearbeitungseinheit 12 in Y-Achsrichtung und in Z-Achsrichtung und durch Rotation der Werkzeugaufnahmeeinheit 18 um die B-Achse und durch Verschiebung der Handhabungseinheiten 6 und 8 entlang der X-Achse und durch Rotation der Handhabungsköpfe der Handhabungseinheiten 6 und 8 um die A-Achse, kann die zwischen den Handhabungseinheiten 6 und 8 eingespannte gebrauchte Turbinenschaufel 10 entlang ihres gesamten Umfangs und ihrer gesamten Länge bearbeitet werden.

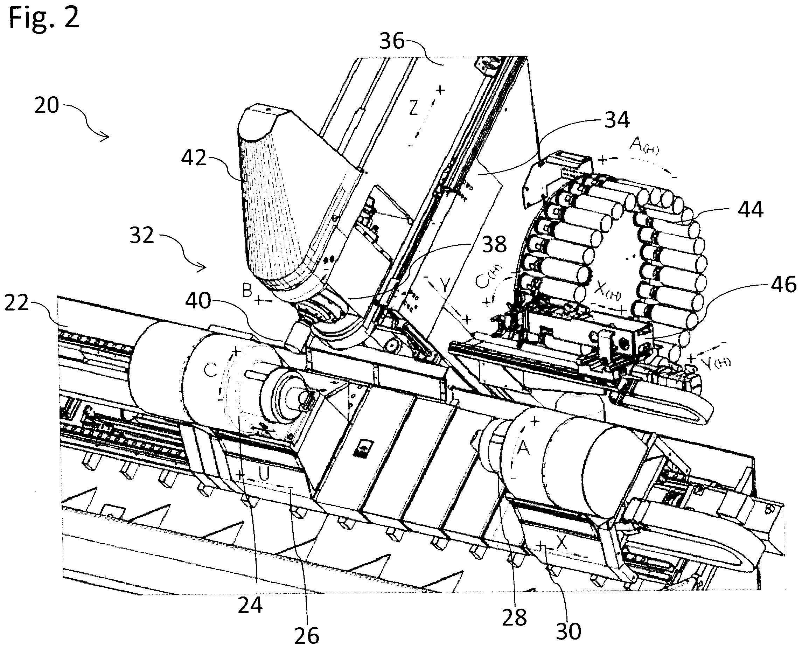

Fig. 2 zeigt eine perspektivische Ansicht einer zweiten Bearbeitungsmaschine 20 mit zwei Bearbeitungseinheiten 24, 28 ohne dazwischen eingespannter Turbinenschaufel, mit einer Bearbeitungseinheit 32, mit einem Werkzeugmagazin 44 und mit einer Werkzeugwechseleinheit 46, gemäß einem weiteren Ausführungsbeispiel der Erfindung.

Die in Figur 2 gezeigte zweite Bearbeitungsmaschine 20 ist in einem höheren Detailgrad gezeigt, und sie verfügt zusätzlich über ein Werkzeugmagazin 44 und über eine Werkzeugwechseleinheit 46, und an ihrer rotierbaren Werkzeugaufnahmeeinheit 38 ist exemplarisch ein Fräskopf 40 angedockt.

Die zweite Bearbeitungsmaschine 20 verfügt ebenfalls über ein Maschinengrundgestell 22, auf dem eine linke Handhabungseinheit 24 mit Spannelement und mit verfahrbarem Schlitten 26 und eine rechte Handhabungseinheit 28 mit Spannelement und mit verfahrbarem Schlitten 30 in X-Richtung verschiebbar angeordnet und in der gewünschten Position arretierbar sind. Diese X-Richtung, die der Querrichtung des Maschinengrundgestells 22 entspricht, ist auf dem verfahrbaren Schlitten 30 der rechten Handhabungseinheit 28 eingezeichnet.

Um zwischen den Spannelementen der Handhabungseinheiten 24 und 28 Bauteile, insbesondere eine Turbinenschaufel, einen Impeller oder einen Blisk verschiedener Länge aufnehmen und sicher halten zu können, kann der Abstand der Handhabungseinheiten 24 und 28 zueinander verändert werden, dies ist durch die auf dem verfahrbaren Schlitten 26 der linken Handhabungseinheit 24 angeordnete Hilfsachse U gekennzeichnet.

Die Handhabungseinheiten 24 und 28 verfügen jeweils über einen festen Basiskörper und über einen zu der jeweils gegenüberliegenden Handhabungseinheit gerichteten drehbaren Handhabungskopf, an dem jeweils Spannelemente angebracht sind, die das dazwischen angeordnete Bauteil sicher halten. Die Rotationsachse A ist auf dem Hauptkörper der rechten Handhabungseinheit 28 dargestellt. Um die Winkelpositionen der Spannelemente der beiden Handhabungseinheiten 24 und 28 zueinander ändern zu können, ist auch eine Bewegung einer Handhabungseinheit alleine, ohne die jeweils gegenüberliegende Handhabungseinheit mit zu bewegen, möglich. Dies ist durch die Hilfsachse C, die auf dem Hauptkörper der linken Handhabungseinheit 24 eingezeichnet ist, dargestellt.

Im Betrieb werden beim Quer-Verfahren des eingespannten Bauteils entlang der X-Achse beide Handhabungseinheiten 6 und 8 mit dem dazwischen eingespannten Bauteil simultan bewegt, ebenso werden beim Rotieren beide Handhabungsköpfe der Handhabungseinheiten 24 und 28 simultan um die A-Achse rotiert. Das Bewegen und Rotieren der Handhabungseinheiten 24 und 28 und deren Handhabungsköpfe erfolgt üblicherweise über Elektromotoren. Dies ist dem Fachmann geläufig und braucht hier nicht weiter erläutert zu werden.

Ebenso wie bei der ersten Bearbeitungsmaschine 2 verfügt die Bearbeitungseinheit 32 über eine an dem Maschinengrundgestell 4 in Y-Achsrichtung, also nach oben und nach unten verfahrbar befestigte Y-Grundschlitteneinheit 34, über eine an der Y-Grundschlitteneinheit 34 in Z-Achsrichtung, also nach vorne und nach hinten, verfahrbar befestigte Z-Grundschlitteneinheit 36 und über eine an dem vorderen Ende der Z-Grundschlitteneinheit 36 um eine B-Achse rotierbare Werkzeugaufnahmeeinheit 38, an der im Ausführungsbeispiel der Figur 2 ein Fräskopf 40 angedockt ist.

Die Y-Achse ist an der Y-Grundschlitteneinheit 34 eingezeichnet, die Z-Achse ist an der Z-Grundschlitteneinheit 36 eingezeichnet und die B-Achse ist an dem oberen Bereich des vorderen Endes der Z-Grundschlitteneinheit 36 angeordnet. Bei der B-Achse handelt es sich um eine kreisbogenförmige Achse. Die Mittelachse dieser B-Achse liegt vorzugsweise parallel zu der Y-Achse.

Die Werkzeugaufnahmeeinheit 38 verfügt über einen entsprechenden Antrieb, um den Fräskopf 40 und andere Werkzeugköpfe für eine spanende Bearbeitung zu drehen.

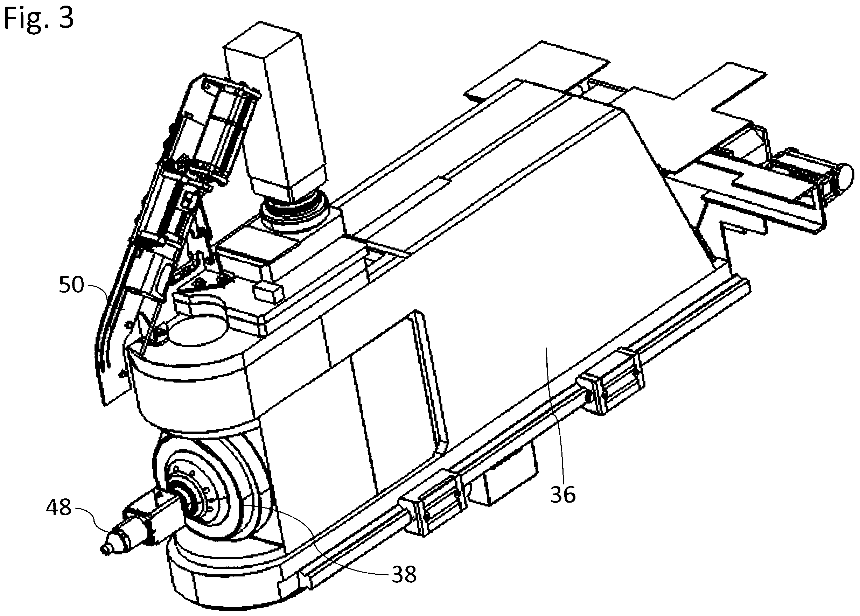

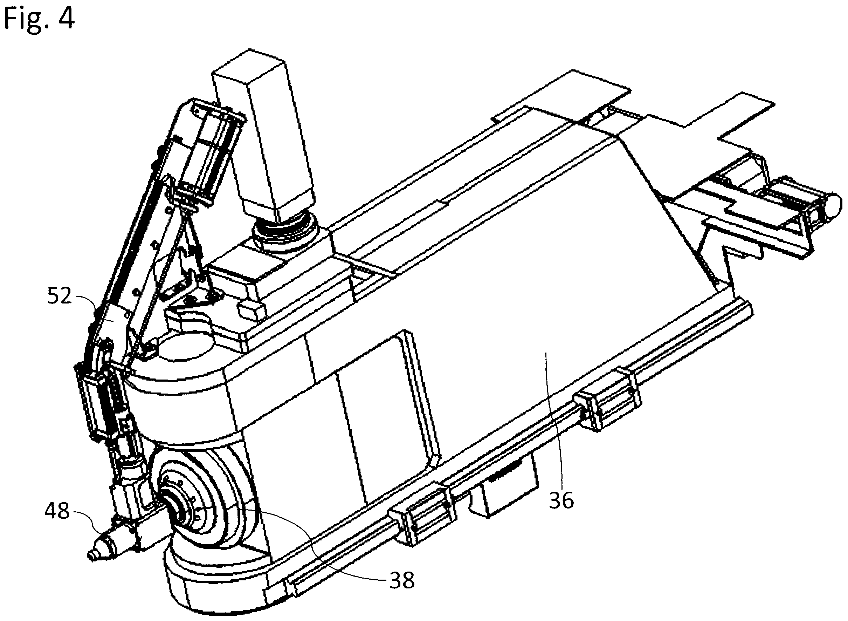

Die Bearbeitungseinheit 32 verfügt über eine obere Verkleidung, unter der, wie in den folgenden Figuren 3 und 4 gezeigt, eine Material- und Laserstrahlzuführeinheit für den Laserschweißkopf angeordnet ist.

Für eine kollisionsvermeidende Bearbeitung sind das vordere Ende der Y-Grundschlitteneinheit 34, das durch zwei vertikal beabstandete Platten gebildet ist, zwischen denen die rotierbare Werkzeugaufnahmeeinheit 38 aufgenommen ist, und das vordere Ende der oberen Verkleidung 42 abgerundet ausgebildet. Zudem neigt sich das vordere Ende der oberen Verkleidung 42 schräg nach hinten.

Die rotierbare Werkzeugeinheit 38 mit daran angedocktem Fräskopf 40 ist in Figur 2 in der nach vorne gerichteten Bearbeitungsposition dargestellt, sie kann von dieser in Figur 2 nach rechts, also zu der Werkzeugwechseleinheit 46 hin, in eine Werkzeugwechselposition gedreht werden.

Ebenso kann die rotierbare Werkzeugaufnahmeeinheit 38 mit daran angedocktem Werkzeugkopf auch in Bearbeitungspositionen gedreht werden, in denen die Längsachse des Werkzeugkopfs einen Winkel mit der Z-Achse einschließt.

Das Werkzeugmagazin 44 ist bei der zweiten Bearbeitungsmaschine 20 rechts von der Bearbeitungseinheit 32 angeordnet und scheibenförmig ausgebildet, wobei die Scheibe parallel zu der durch die Y- und die Z-Achsen aufgespannte Ebene liegt. Entlang ihres Umfangs weist das Werkzeugmagazin 44 eine Vielzahl von Magazinplätzen mit darin befindlichen Werkzeugköpfen unterschiedlicher Art auf, insbesondere wenigstens einen Fräskopf, wenigstens einen Laserschweißkopf, wenigstens einem Messtaster und wenigstens ein Polierwerkzeug, insbesondere eine Polierbürste.

Die Werkzeugwechseleinheit 46 verfügt über eine entsprechende Greifeinrichtung, insbesondere über Greifarme und über eine Verfahreinrichtung, mittels derer die Greifeinrichtung zwischen dem Werkzeugmagazin 44 und der rotierbaren Werkzeugaufnahmeeinheit 38 verfahren werden kann.

Beim Werkzeugwechsel wird zunächst die rotierbare Werkzeugaufnahmeeinheit 38 in die Werkzeugwechselposition gedreht, dann greift die Werkzeugwechseleinheit 46 das an der Werkzeugaufnahmeeinheit 38 angedockte Werkzeug und löst es von dieser, dann verbringt es dieses Werkzeug zu dem Werkzeugmagazin 44 und legt es dort in einem bestimmten leeren Magazinplatz ab, zu dem das Werkzeugmagazin 44 zuvor hin gedreht worden ist. Dann wird das Werkzeugmagazin 44 so gedreht, dass die Greifer der Werkzeugwechseleinheit 46 das nun benötigte Werkzeug greifen, wieder zu der rotierbaren Werkzeugaufnahmeeinheit 38 verbringen und an dieser andocken kann, bevor die Werkzeugwechseleinheit 46 wieder zurück zum Werkzeugmagazin 44 verfahren und die rotierbare Werkzeugaufnahmeeinheit 38 wieder in die Bearbeitungsposition geschwenkt wird.

Die erste Bearbeitungsmaschine 2 aus Figur 1 und die zweite Bearbeitungsmaschine 20 aus Figur 2 werden aufgrund ihrer fünf Hauptachsen X, Y, Z, A und B auch als 5-Achs-Maschinen bezeichnet, die zusätzlichen C- und U-Achsen stellen Hilfsachsen dar.

Fig. 3 zeigt die Z-Schlitteneinheit 36 und die rotierbare Werkzeugaufnahmeeinheit 38 der Bearbeitungsmaschine 20, mit einem an der Werkzeugaufnahmeeinheit 38 angedockten Laserschweißkopf 48 und mit einer oberhalb Z-Schlitteneinheit 36 angeordneten Material- und Laserstrahlzuführeinheit 50 in Parkposition, mit abgenommener Verkleidung.

Der Laserschweißkopf 48 ist in Figur 3 in seiner an der rotierbaren Werkzeugaufnahmeeinheit 38 angedockten Position dargestellt. Wie gut zu erkennen ist, hat er kleine und handliche Abmessungen. In seinem vorderen Bereich, der einen kreisförmigen Durchmesser hat und der sich nach vorne hin verjüngt, ist eine Bearbeitungs- und Fokussier-Optik untergebracht, die zwei oder mehrere Laserstrahlen kreuzförmig auf das Bauteil richten kann. Der hintere Bereich des Laserschweißkopfs 48 hat einen rechteckigen Querschnitt und ist mittels einer hier nicht gezeigten Kupplung an die Zuführeinheit 50 ankoppelbar.

Die Zuführeinheit 50 beinhaltet eine Laserstrahlquelle, eine optische Führung für den Laserstrahl sowie eine Materialzufuhr und eine in Figur 3 nicht zu erkennende Kupplung, mittels derer die Zuführeinheit 50 an den Laserschweißkopf 48 angekoppelt werden kann.

Fig. 4 zeigt die Z-Schlitteneinheit 36 und die rotierbare Werkzeugaufnahmeeinheit 38, mit an den Laserschweißkopf 48 angedockter Material- und Laserstrahlzuführeinheit 52, mit abgenommener Verkleidung.

Wie in Figur 4 gut zu sehen ist, ist die Zuführeinheit 52 von oben an den Laserschweißkopf 48 angekoppelt, sodass der von einer Laserquelle erzeugte Laserstrahl über die optische Führung in der Zuführeinheit 52 über die Kupplung und über die optische Führung in dem Laserschweißkopf 48 zu der Bearbeitungs- und Fokussier-Optik gelangt und von dieser auf das Bauteil gerichtet wird, und sodass das aufzutragende pulverförmige Material über die Materialzufuhr in der Zuführeinheit 52 über die Kupplung und über die Materialzufuhr in dem Laserschweißkopf 48 ebenfalls zu dem Bauteil gelangt und dort durch Laserauftragschweißen an den gewünschten Positionen aufgetragen wird.

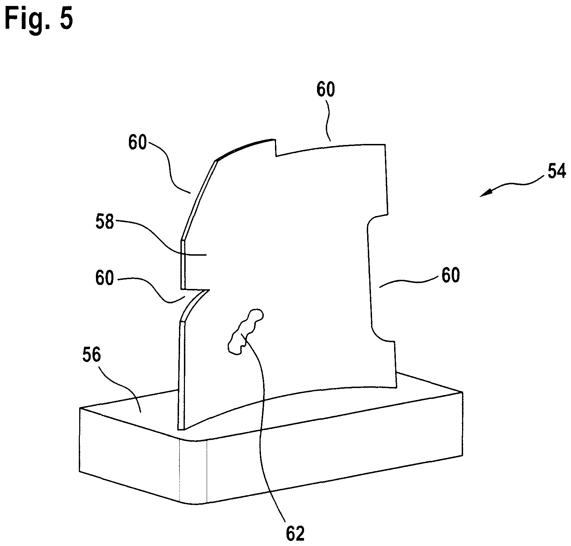

Mit Bezug auf die Figuren 5 bis 8 wird das erfindungsgemäße Verfahren zum Wiederherstellen eines gebrauchten Bauteils anhand der exemplarisch dargestellten beschädigten Turbinenschaufel 54 erläutert.

Die in Figur 5 dargestellte beschädigte Turbinenschaufel 54 umfasst einen Schaufelfuß 56, ein davon nach oben wegstehendes Schaufelblatt 58 mit einem gekrümmten Schaufelprofil. Das in Figur 5 oben dargestellte Ende des Schaufelblatts 58 wird auch als Schaufelkopf bezeichnet.

Wie in Figur 5 gut zu erkennen ist, weist das Schaufelblatt 58 insgesamt vier Bereiche 60 mit fehlendem Material und eine Kerbe 62 in der Seitenfläche auf. Bei den vier Bereichen 60 mit fehlendem Material handelt es sich um eine dreiecksförmige Fehlstelle in der Vorderkante, um eine schräge Fehlstelle im Übergangsbereich zwischen Vorderkante und Schaufelkopf, um eine längliche Fehlstelle am hinteren Ende des Schaufelkopfs und um eine längliche Fehlstelle an der Hinterkante. Die Kerbe 62 bildet einen Bereich von verminderter Materialstärke im Schaufelprofil.

Diese beschädigte Turbinenschaufel 54 wird nun zwischen den Handhabungseinheiten 24 und 28 der Bearbeitungsmaschine 20 eingespannt, und danach wird durch das Werkzeugmagazin 44 und die Werkzeugwechseleinheit 46 ein Messtaster an die rotierbare Werkzeugaufnahmeeinheit 38 angedockt. Durch Bewegen der Handhabungseinheiten 24 und 28 und der Bearbeitungseinheit 32 wird die Geometrie der beschädigten Turbinenschaufel 54, insbesondere eine genügend große Anzahl von Punkten derselben abgefahren. Die dabei aufgenommenen Messpositionen werden an eine Steuereinheit der Bearbeitungsmaschine 20 oder einen externen Computer übermittelt, die daraus die Ist-Form der beschädigten Turbinenschaufel 54 ermittelt und diese mit einer gespeicherten idealen Soll-Form vergleicht, um daraus Abweichungen zu ermitteln, insbesondere von Bereichen, an denen Material über die Soll-Form hinausgeht und von Bereichen, an denen Material fehlt.

Die ermittelten Bereiche, an denen Material über die Soll-Form hinausgeht, können z. B. Kanten an den Bereichen 60 mit fehlendem Material und der Kerbe 62 sein. Bereiche, an denen Material fehlt, sind die Bereiche 60 mit fehlendem Material und die Kerbe 62 selbst. Nun wird der Messtaster von der rotierbaren Werkzeugaufnahmeeinheit 38 abgedockt und zurück ins Werkzeugmagazin 44 gebracht.

Daran kann sich eine Vorbearbeitung anschließen, um die Turbinenschaufel 54 für das Laserauftragsschweißen zu glätten.

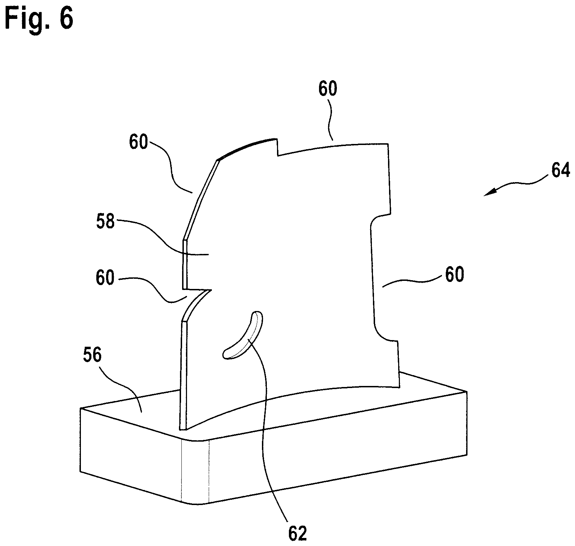

Danach wird der Fräskopf 40 an die rotierbare Werkzeugaufnahmeeinheit 38 angedockt. Mithilfe dieses Fräskopfes 40 werden die Bereiche, an denen Material über die Soll-Form hinausgeht, abgefahren, und dieses überschüssige Material wird durch spanende Bearbeitung abgetragen. Dies kann auch als Sauber-Fräsen bezeichnet werden. In diesem Zustand ist die sauber gefräste Turbinenschaufel 64 gemäß Figur 6 gezeigt.

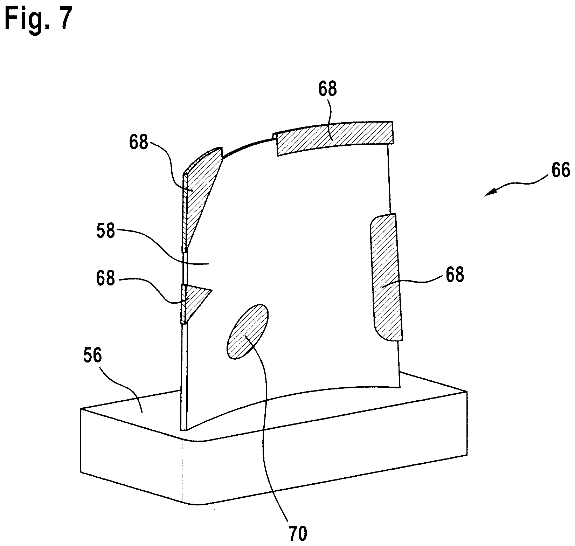

Nun wird der Fräskopf 40 von der rotierbaren Werkzeugaufnahmeeinheit 38 abgedockt und in das Werkzeugmagazin 44 verbracht, und der Schweißkopf 48 aus dem Werkzeugmagazin 44 wird sowohl an die Werkzeugaufnahmeeinheit 38 als auch an die Zuführeinheit 52 angedockt. Dann werden nacheinander die vier Bereiche 60 mit fehlendem Material und die Kerbe 62 abgefahren, und es wird durch den Laserschweißkopf 48 an diesen Bereichen 60, 62 durch Laserauftragschweißen Material auf die Turbinenschaufel 54 aufgetragen, das insbesondere dem Material der beschädigten Turbinenschaufel 54 entspricht oder diesem ähnlich ist, je nach gewünschten Eigenschaften. In diesem Zustand, nach dem Arbeitsschritt des Laserauftragschweißens, ist die Turbinenschaufel 66 in Figur 7 gezeigt. Die Bereiche 68, an denen Material hinzugefügt worden ist, sowie die aufgefüllte Kerbe 70 sind dabei gut zu erkennen. Des Weiteren ist gut zu erkennen, dass ein wenig zu viel Material aufgetragen worden ist, und das aufgetragene Material ein wenig über die Vorderkante, den Schaufelkopf und die Hinterkante sowie ebenfalls über die Seitenfläche heraussteht.

Nun wird der Laserschweißkopf 48 sowohl von der Werkzeugaufnahmeeinheit 38 als auch von der Zuführeinheit 52 abgedockt und in das Werkzeugmagazin 44 verbracht, und es wird ein Schlicht-Fräskopf für ein Schlichtfräsen an der Werkzeugaufnahmeeinheit 38 angedockt, der nun dieses überschüssige Material durch spanende Bearbeitung abträgt. Zuvor kann noch einmal ein Messtaster angedockt werden, um die neue Ist-Form zu ermitteln und diejenigen Bereich zu ermitteln, an denen Material über die Soll-Form hinausgeht.

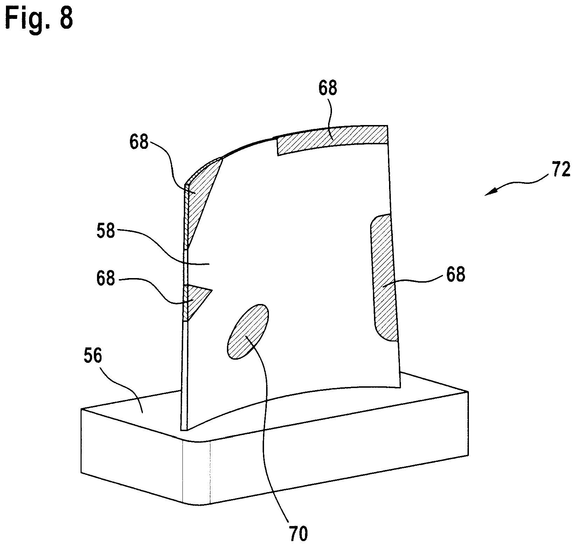

Durch Abfahren dieser Bereiche durch den Schlicht-Fräskopf wird dieses überschüssige Material entfernt. Nun wird dieser Schlicht-Fräskopf von der Werkzeugaufnahmeeinheit 38 abgedockt und in das Werkzeugmagazin 44 zurückverbracht und ein Polierwerkzeug, insbesondere eine Polierbürste wird an die Werkzeugaufnahmeeinheit 38 angedockt. Schließlich werden wenigstens die zuvor bearbeiteten Bereiche der Turbinenschaufel, vorzugsweise die gesamte Turbinenschaufel abgefahren und mit dem Polierwerkzeug fertigpoliert. In diesem Zustand, nach dem Arbeitsschritt des Schlicht-Fräsens und des Polierens, ist die Turbinenschaufel 72 in Figur 8 gezeigt.

Wie gut zu erkennen ist, sind die Bereiche, an denen durch Laserauftragschweißen Material hinzufügt worden ist, nämlich die Bereiche 68 mit hinzugefügtem Material und die ausgefüllte Kerbe 70 von anderer Farbe als das Grundmaterial der Turbinenschaufel 72. Somit ist gut zu erkennen, dass die Turbinenschaufel 72 mit dem erfindungsgemäßen Verfahren wiederhergestellt worden ist.

### BEZUGSZEICHENLISTE

- 2: erste Bearbeitungsmaschine
- 4: Maschinengrundgestell
- 6: linke Handhabungseinheit mit Spannelement
- 8: rechte Handhabungseinheit mit Spannelement
- 10: eingespannte gebrauchte Turbinenschaufel
- 12: Bearbeitungseinheit
- 14: Y-Grundschlitteneinheit
- 16: Z-Grundschlitteneinheit
- 18: rotierbare Werkzeugaufnahmeeinheit
- 20: zweite Bearbeitungsmaschine
- 22: Maschinengrundgestell
- 24: linke Handhabungseinheit mit Spannelement
- 26: verfahrbarer Schlitten
- 28: rechte Handhabungseinheit mit Spannelement
- 30: verfahrbarer Schlitten
- 32: Bearbeitungseinheit
- 34: Y-Grundschlitteneinheit
- 36: Z-Grundschlitteneinheit
- 38: rotierbare Werkzeugaufnahmeeinheit
- 40: Fräskopf
- 42: obere Verkleidung
- 44: Werkzeugmagazin
- 46: Werkzeugwechseleinheit
- 48: Laserschweißkopf
- 50: Material- und Laserstrahlzuführeinheit in Parkposition
- 52: Material- und Laserstrahlzuführeinheit in angedockter Postion
- 54: beschädigte Turbinenschaufel
- 56: Schaufelfuß
- 58: Schaufelblatt
- 60: Bereiche mit fehlendem Material
- 62: Kerbe
- 64: sauber gefräste Turbinenschaufel
- 66: Turbinenschaufel nach Arbeitsschritt Laserauftragsschweißen
- 68: Bereiche mit hinzugefügtem Material
- 70: ausgefüllte Kerbe
- 72: Turbinenschaufel nach Arbeitsschritt Schlichtfräsen und Polieren

## Patentansprüche

1. Bearbeitungsmaschine (20) für ein als Turbinenschaufel, als Impeller oder als Blisk ausgebildetes Bauteil (54), aufweisend die folgenden Merkmale:
zwei sich gegenüberliegende Handhabungseinheiten (24, 28) mit Halteelementen für ein dazwischen positioniertes Bauteil;
einen Fräskopf (40) zur spanenden Bearbeitung des Bauteils (54);
eine bewegbare Bearbeitungseinheit (32) mit einer Werkzeugkopfaufnahmeeinheit (38), die so ausgebildet ist, dass der Fräskopf (40) an der Werkzeugkopfaufnahmeeinheit (38) andockbar ist,
wobei die bewegbare Bearbeitungseinheit (32) folgende Elemente aufweist:
eine Y-Grundschlitteneinheit (34), die gegenüber einem Maschinengrundgestell (22) entlang einer nach oben und nach unten gerichteten Y-Achse verfahrbar ist,
eine Z-Grundschlitteneinheit (36), die gegenüber der Y-Grundschlitteneinheit (34) entlang einer nach vorne und nach hinten gerichteten Z-Achse verfahrbar ist, und
wobei die Werkzeugkopfaufnahmeeinheit (38) an der Z-Grundschlitteneinheit (36) drehbar gelagert und um eine B-Achse rotierbar ausgebildet ist, die parallel zur Y-Achse der Y-Grundschlitteneinheit (34) liegt;
**dadurch gekennzeichnet,**
**dass** die Bearbeitungsmaschine (20) zum Wiederherstellen eines als gebrauchte Turbinenschaufel, als gebrauchter Impeller oder als gebrauchter Blisk ausgebildeten Bauteils (54) bestimmt ist;
**dass** die Bearbeitungseinheit (32) einen Laserschweißkopf (48) zum Laserauftrags-Schweißen auf das Bauteil (54) umfasst;
**dass** die bewegbare Bearbeitungseinheit (32) mit der Werkzeugkopfaufnahmeeinheit (38) so ausgebildet ist, dass der Laserschweißkopf (48) zum Laserauftrags-Schweißen auf das Bauteil (54) an der Werkzeugkopfaufnahmeeinheit (38) andockbar ist, so dass Material an Stellen des Bauteils (54) aufbringbar ist, an denen Material fehlt; und
**dass** die Bearbeitungseinheit (32) ferner eine Material- und Laserstrahlzuführeinheit (50, 52) für den Laserschweißkopf (48) aufweist, die eine Laserstrahlquelle und eine optische Führung für den Laserstrahl sowie eine Materialzufuhr beinhaltet und die an der drehbaren Werkzeugkopfaufnahmeeinheit (38) oder an der Z-Grundschlitteneinheit (36) angebracht und so ausgebildet ist, dass sie bei angedocktem Zustand des Laserschweißkopfs (48) an die Werkzeugkopfaufnahmeeinheit (38) den Laserschweißkopf (48) mit dem Laserstrahl zum Laserauftragsschweißen und mit dem pulverförmigem Material versorgt.

2. Bearbeitungsmaschine (20) nach Anspruch 1, wobei die bewegbare Bearbeitungseinheit (32) weiterhin so ausgebildet ist, dass ein Messtaster an ihr andockbar ist, mittels dessen die Ist-Form des wiederherzustellenden Bauteils (54) ermittelbar ist und/oder wobei die bewegbare Bearbeitungseinheit (32) weiterhin so ausgebildet ist, dass ein Polierwerkzeug zum Polieren des Bauteils (54) an ihr andockbar ist.

3. Bearbeitungsmaschine (20) nach Anspruch 1, weiterhin umfassend ein Werkzeugmagazin (44) zur Aufnahme wenigstens eines an die Bearbeitungseinheit (32) andockbaren Werkzeugkopfs (40, 48), insbesondere eines Fräskopfs, eines Laserschweißkopfs, eines Messtasters und eines Polierwerkzeugs, sowie eine Werkzeugwechseleinheit (46), die so ausgebildet ist, dass der jeweils benötigte Werkzeugkopf (40, 48) aus dem Werkzeugmagazin (44) entnehmbar, zu der Bearbeitungseinheit (32) bewegbar und an dieser andockbar ist und/oder dass der jeweils angedockte Werkzeugkopf (40, 48) nach dessen Gebrauch von der Bearbeitungseinheit (32) abdockbar und aufnehmbar, zu dem Werkzeugmagazin (44) bewegbar und dort ablegbar ist.

4. Bearbeitungsmaschine (20) nach einem der vorhergehenden Ansprüche, weiterhin aufweisend eine Steuereinheit, die so ausgebildet ist, dass sie aus den von dem Messtaster aufgenommenen Messungen des Bauteils (54) die Ist-Form des Bauteils (54) ermittelt, die Ist-Form des Bauteils (54) mit einer gespeicherten Soll-Form des Bauteils (54) vergleicht, und aus diesem Vergleich Abweichungen ermittelt, insbesondere Bereiche, an denen Material über die Soll-Form hinaus geht und Bereiche (60, 62), an denen Material fehlt.

5. Bearbeitungsmaschine (20) nach Anspruch 4, wobei die Steuereinheit so ausgebildet ist, dass sie die Bearbeitungseinheit (32) so ansteuert, dass sie unter Verwendung des Fräskopfes (40) an denjenigen Bereichen des Bauteils, an denen das Material über die Soll-Form hinausgeht, Material abträgt und unter Verwendung des Laserschweißkopfes (48) an denjenigen Bereichen, an denen Material fehlt, Material aufträgt und/oder unter Verwendung des Fräskopfes (40) zu viel aufgetragenes Material wieder abträgt und/oder unter Verwendung des Polierwerkzeugs das Bauteil (54) fertig poliert.

6. Bearbeitungsmaschine (20) nach einem der vorhergehenden Ansprüche, wobei der Laserschweißkopf (48) eine an die optische Führung der Zuführeinheit (50, ,52) ankoppelbare optische Führung und eine Bearbeitungs- und Fokussier-Optik, insbesondere zum Erzeugen von mehreren, insbesondere kreuzförmigen Laserstrahlen sowie eine an die Materialzufuhr der Zuführeinheit ankoppelbare Materialzufuhr aufweist, und/oder wobei der Laserschweißkopf (48) Abmessungen hat, die geringer als 80 x 85 x 250 mm sind.

7. Verfahren für ein als Turbinenschaufel, als Impeller oder als Blisk ausgebildetes Bauteil (54), aufweisend die folgenden Schritte:
Einspannen eines gebrauchten Bauteils (54) zwischen zwei sich gegenüberliegenden Handhabungseinheiten (24, 28) mit Spannelementen; und
Andocken eines Kopfs (40) an die Werkzeugkopfaufnahmeeinheit (38) einer Bearbeitungseinheit (32);
wobei die Bearbeitungseinheit (32) bewegt wird, indem eine Y-Grundschlitteneinheit (34) der Bearbeitungseinheit (32) entlang einer nach oben und nach unten gerichteten Y-Achse gegenüber einem Maschinengrundgestell (22) verfahren wird, indem eine Z-Grundschlitteneinheit (36) der Bearbeitungseinheit (32) gegenüber der Y-Grundschlitteneinheit (34) entlang einer nach vorne und nach hinten gerichteten Z-Achse verfahren wird, und indem die Werkzeugkopfaufnahmeeinheit (38), die an der Z-Grundschlitteneinheit (36) drehbar gelagert ist, um eine B-Achse, die parallel zur Y-Achse der Y-Grundschlitteneinheit (34) liegt, rotiert wird;
**dadurch gekennzeichnet, dass**
das Verfahren zum Wiederherstellen eines als gebrauchte Turbinenschaufel, als gebrauchter Impeller oder als gebrauchter Blisk ausgebildeten Bauteils (54) bestimmt ist; dass
der angedockte Kopf ein Fräskopf (40) ist und das Bauteil (54), insbesondere diejenigen Bereiche des Bauteils (54) sauber gefräst werden, an denen Material über die Soll-Form heraussteht, unter Bewegen der Handhabungseinheiten (24, 28) und der Bearbeitungseinheit (32); und
dass das Verfahren die weiteren Schritte aufweist: Andocken eines Laserschweißkopfs (48) an die Werkzeugkopfaufnahmeeinheit (38) der Bearbeitungseinheit (32) und Auftragen von Material auf das Bauteil (54) durch Laserauftragsschweißen, insbesondere auf diejenigen Bereiche des Bauteils (54), an denen Material fehlt, unter Bewegen der Handhabungseinheiten (24, 28) und der Bearbeitungseinheit (32) sowie unter Versorgen des Laserschweißkopfs (48) mit dem Laserstrahl zum Laserauftragsschweißen und mit dem pulverförmigem Material, wobei die Bearbeitungseinheit (32) eine Material- und Laserstrahlzuführeinheit (50, 52) für den Laserschweißkopf (48) aufweist, die eine Laserstrahlquelle und eine optische Führung für den Laserstrahl sowie eine Materialzufuhr beinhaltet und die insbesondere an der drehbaren Werkzeugkopfaufnahmeeinheit (38) oder an der Z-Grundschlitteneinheit (36) angebracht ist.

8. Verfahren nach Anspruch 7, weiterhin aufweisend
Andocken des Fräskopfs (40) und Abtragen von zu viel aufgetragenem Material; und
Andocken der Poliereinheit und Fertig Polieren des Bauteils.

9. Verfahren nach Anspruch 7 oder 8, weiterhin aufweisend,
Ermitteln der Ist-Form des Bauteils (54), insbesondere Andocken eines Messtasters an eine Bearbeitungseinheit (32) und Ermitteln der Ist-Form des Bauteils (54) unter Bewegen der Handhabungseinheiten (24, 28) und/oder der Bearbeitungseinheit (32);
Vergleichen der Ist-Form des Bauteils (54) mit einer gespeicherten Soll-Form; und Ermitteln der Abweichung der Ist-Form des Bauteils (54) von einer bekannten Soll-Form, insbesondere von Bereichen, an denen Material über die Soll-Form hinaus geht und von Bereichen (60, 62), an denen Material fehlt.

10. Verfahren nach einem der Ansprüche 7 bis 9, weiterhin aufweisend, nach dem Schritt des Auftragens von Material auf das Bauteil (54) durch Laserauftragsschweißen,
erneutes Ermitteln der Ist-Form des Bauteils (54), insbesondere Andocken eines Messtasters an eine Bearbeitungseinheit (32) und Ermitteln der Ist-Form des Bauteils (54) unter Bewegen der Handhabungseinheiten (24, 28) und/oder der Bearbeitungseinheit (32), erneutes Vergleichen der Ist-Form des Bauteils (54) mit einer gespeicherten Soll-Form; und erneutes Ermitteln der Abweichung der Ist-Form des Bauteils (54) von einer bekannten Soll-Form, insbesondere von Bereichen, an denen Material über die Soll-Form hinaus geht und von Bereichen (60, 62), an denen Material fehlt; und/oder
erneutes Andocken des Fräskopfs (40) oder eines Fräskopfs (40) an die Bearbeitungseinheit (32) und Schlicht-Fräsen des Bauteils (54), insbesondere derjenigen Bereiche des Bauteils (54), an denen Material über die Soll-Form heraussteht, unter Bewegen der Handhabungseinheiten (24, 28) und/oder der Bearbeitungseinheit (32); und/oder
Andocken eines Polierwerkzeugs, insbesondere einer Polierbürste an die Bearbeitungseinheit (32) und Fertigpolieren des Bauteils (54), unter Bewegen der Handhabungseinheiten (24, 28) und/oder der Bearbeitungseinheit (32).

11. Verfahren nach einem der Ansprüche 7 bis 10, weiterhin umfassend
Bereitstellen eines Werkzeugmagazins (44) zur Aufnahme wenigstens eines an die Bearbeitungseinheit (32) andockbaren Werkzeugkopfs (40, 48), insbesondere eines Fräskopfs, eines Laserschweißkopfs, eines Messtasters und eines Polierwerkzeugs, sowie
Entnehmen des jeweils benötigten Werkzeugkopfs (40, 48) aus dem Werkzeugmagazin (44) mit der Werkzeugwechseleinheit (46), Bewegen desselben zu der Bearbeitungseinheit (32) und Andocken desselben an dieser, und/oder Abdocken des jeweils angedockten Werkzeugkopfs (40, 48) nach dessen Gebrauch von der Bearbeitungseinheit (32), Aufnehmen desselben, Bewegen desselben zu dem Werkzeugmagazin (44) und Ablegen desselben in dem Werkzeugmagazin (44) durch die Werkzeugwechseleinheit (46).

## Claims

1. A processing machine (20) for a component (54) in the form of a turbine blade, an impeller or a blisk, comprising the following features:
two opposing handling units (24, 28) having holding elements for a component positioned in between;
a milling head (40) for machining the component (54);
a movable processing unit (32) having a tool head receiving unit (38) which is designed such that the milling head (40) is dockable to the tool head receiving unit (38),
said movable processing unit (32) comprising the following elements:
an Y basic carriage unit (34) which is displaceable with respect to a machine base frame (22) along an Y axis extending in upward and downward directions,
a Z basic carriage unit (36) which is displaceable with respect to the Y basic carriage unit (34) along a Z axis extending in forward and rearward directions, and
wherein the tool head receiving unit (38) is rotatably supported on the Z basic carriage unit (36) and is designed to be rotatable about a B axis which is arranged parallel to the Y axis of the Y basic carriage unit (34);
**characterized in**
**that** the processing machine (20) is intended for restoring a component (54) in the form of a used turbine blade, a used impeller or a used blisk;
**that** the processing unit (32) comprises a laser welding head (48) for laser deposition welding on the component (54);
**that** the movable processing unit (32) with the tool-head receiving unit (38) is designed such that the laser welding head (48) for laser deposition welding on the component (54) is dockable to the tool head receiving unit (38) such that material can be applied to locations of the component (54) at which there is material missing; and
**that** the processing unit (32) comprises furthermore a material and laser beam supply unit (50, 52) for the laser welding head (48), which includes a laser beam source and an optical guide for the laser beam as well as a material supply and which is mounted on the rotatable tool head receiving unit (38) or on the Z basic carriage unit (36) and is designed such that, when the laser welding head (48) is docked to the tool head receiving unit (38), it provides the laser welding head (48) with the laser beam for laser deposition welding and with the powdered material.

2. The processing machine (20) according to claim 1,
wherein the movable processing unit (32) is further designed such that a measuring probe can be docked thereto, by means of which the actual shape of the component to be restored (54) can be determined and/or wherein the movable processing unit (32) is further designed such that a polishing tool for polishing the component (54) is dockable thereto.

3. The processing machine (20) according to claim 1,
further comprising a tool magazine (44) for receiving at least one tool head (40, 48) dockable to the processing unit (32), in particular a milling head, a laser welding head, a measuring probe and a polishing tool, and a tool change unit (46) which is designed such that the respective tool head (40, 48) required can be taken from the tool magazine (44), moved to the processing unit (32) and docked thereto, and/or that the respectively docked tool head (40, 48) after use thereof can be undocked and received from the processing unit (32) and can be moved to the tool magazine (44) and deposited there.

4. The processing machine (20) according to any of the preceding claims,
further comprising a control unit which is designed such that it determines the actual shape of the component (54) from the measurements of the component (54) recorded by the measuring probe, compares the actual shape of the component (54) with a stored nominal shape of the component (54) and determines from this comparison deviations, in particular areas in which material is in excess of the nominal shape and areas (60, 62) in which there is material missing.

5. The processing machine (20) according to claim 4,
wherein the control unit is designed such that it controls the processing unit (32) such that, by using the milling head (40) at those areas of the component where the material is in excess of the nominal shape, it removes material and, by using the laser welding head (48), it applies material to those areas where material is missing, and/or removes excessively applied material by using the milling head (40) and/or polishes the component (54) to its finished form by using the polishing tool (54).

6. The processing machine (20) according to any of the preceding claims,
wherein the laser welding head (48) comprises an optical guide that can be coupled to the optical guide of the supply unit (50, 52) and a processing and focusing optical system, in particular for generating a plurality, in particular cross-shaped, laser beams, as well as a material supply that can be coupled to the material supply of the supply unit, and/or wherein the laser welding head (48) has dimensions that are less than 80 x 85 x 250 mm.

7. A method for a component (54) in the form of a turbine blade, impeller or blisk, comprising the following steps:
clamping a used component (54) between two opposing handling units (24, 28) having clamping members;
docking a head (40) to the tool head receiving unit (38) of a processing unit (32);
said processing unit (32) being moved in that an Y basic carriage unit (34) of the processing unit (32) is displaced with respect to a machine base frame (22) along an Y axis extending in upward and downward directions, in that a Z basic carriage unit (36) of the processing unit (32) is displaced with respect to the Y basic carriage unit (34) along a Z axis extending in forward and rearward directions, and in that the tool head receiving unit (38), which is rotatably supported on the Z basic carriage unit (36), is rotated about a B axis which is arranged parallel to the Y axis of the Y basic carriage unit (34);
**characterized in**
**that** the method is intended for restoring a component (54) in the form of a used turbine blade, a used impeller or a used blisk;
**that** the docked head is a milling head (40) and the component (54), in particular those areas of the component (54) in which material is present in excess of the nominal shape, is milled clean along with movement of the handling units (24, 28) and the processing unit (32); and
**that** the method comprises the additional steps:
docking a laser welding head (48) to the tool head receiving unit (38) of the processing unit (32) and applying material to the component (54) by laser deposition welding, in particular to those areas of the component (54) where there is material missing, along with movement of the handling units (24, 28) and the processing unit (32) and while providing the laser welding head (48) with the laser beam for laser deposition welding and with the powdered material, wherein the processing unit (32) comprises a material and laser beam supply unit (50, 52) for the laser welding head (48), which includes a laser beam source and an optical guide for the laser beam as well as a material supply and which in particular is mounted on the rotatable tool head receiving unit (38) or on the Z basic carriage unit (36).

8. The method of claim 7, further comprising
docking of the milling head (40) and removing excessively applied material; and
docking of the polishing unit and polishing the component to its finished form.

9. The method according to claim 7 or 8, further comprising
determining the actual shape of the component (54), in particular docking a measuring probe to a processing unit (32) and determining the actual shape of the component (54) while moving the handling units (24, 28) and/or the processing unit (32);
comparing the actual shape of the component (54) with a stored nominal shape; and
determining the deviation of the actual shape of the component (54) from a known nominal shape, in particular of areas where material is in excess of the nominal shape and areas (60, 62) where there is material missing.

10. The method according to any of claims 7 to 9, further comprising, after the step of applying material to the component (54) by laser deposition welding, again determining the actual shape of the component (54), in particular docking a measuring probe to a processing unit (32) and determining the actual shape of the component (54) while moving the handling units (24, 28) and/or the processing unit (32);
again comparing the actual shape of the component (54) with a stored nominal shape; and
again determining the deviation of the actual shape of the component (54) from a known nominal shape, in particular of areas where material is in excess of the nominal shape and areas (60, 62) where there is material missing; and/or
again docking the milling head (40) or a milling head (40) to the processing unit (32) and finishing-milling of the component (54), in particular those areas of the component (54) in which material protrudes beyond the nominal shape, while moving the handling units (24, 28) and/or the processing unit (32); and/or
docking a polishing tool, in particular a polishing brush, to the processing unit (32) and polishing the component (54) to its finished form while moving the handling units (24, 28) and/or the processing unit (32).

11. The method according to any of claims 7 to 10, further comprising
providing a tool magazine (44) for receiving at least one tool head (40, 48) dockable to the processing unit (32), in particular a milling head, a laser welding head, a measuring probe and a polishing tool, and
taking the respectively required tool head (40, 48) from the tool magazine (44) by means of the tool changing unit (46), moving the same to the processing unit (32) and docking it to the same, and/or undocking the respectively docked tool head (40, 48) from the processing unit (32) after use thereof, taking up the same, moving the same to the tool magazine (44) and depositing it in the tool magazine (44) by means of the tool changing unit (46).

## Revendications

1. Machine-outil (20) destinée à une pièce (54) réalisée sous la forme d'une aube de turbine, d'une turbine ou d'un disque aubagé, présentant les caractéristiques indiquées ci-après :
deux mandrins (24, 28) opposés l'un à l'autre comprenant des éléments de retenue pour une pièce disposée entre eux ;
une tête de fraisage (40) pour l'usinage de la pièce (54) ;
une unité d'usinage mobile (32) comprenant une broche (38) pour la tête d'outil, qui est réalisée d'une manière telle que la tête de fraisage (40) peut venir s'arrimer à la broche (38) pour la tête d'outil ;
dans laquelle l'unité d'usinage mobile (32) présente les éléments suivants :
un chariot Y (34) qui est capable de se déplacer par rapport au bâti de la machine (22) le long d'un axe Y orienté vers le haut et vers le bas ;
un chariot Z (36) qui est capable de se déplacer par rapport au chariot Y (34) le long d'un axe Z orienté vers l'avant et vers l'arrière ; et
dans laquelle la broche (38) est montée en rotation contre le chariot Z (36) et est réalisée de manière à pouvoir effectuer des rotations autour d'un axe B qui est parallèle à l'axe Y du chariot Y (34) ;
**caractérisée**
**en ce que** la machine-outil (20) est destinée à la restauration d'une pièce (54) réalisée sous la forme d'une aube de turbine usagée, d'une turbine usagée ou d'un disque aubagé usagé,
**en ce que** l'unité d'usinage (32) comprend une tête de soudage par faisceau laser (48) pour le rechargement laser de la pièce (54) ;
**en ce que** l'unité d'usinage mobile (32) comprenant la broche (38) pour la tête de l'outil est réalisée d'une manière telle que la tête de soudage par faisceau laser (48) à des fins de rechargement laser de la pièce (54) peut venir s'arrimer à la broche (38) pour la tête de l'outil, d'une manière telle que l'on peut déposer de la matière à des endroits de la pièce (54) où de la matière fait défaut ; et
**en ce que** l'unité d'usinage (32) présente en outre une unité (50, 52) pour l'alimentation de la matière et d'un faisceau laser pour la tête de soudage par faisceau laser (48), qui renferme une source de faisceau laser et un guidage optique pour le faisceau laser ainsi qu'une alimentation de matière, et qui vient s'appliquer contre la broche rotative (38) ou contre le chariot Z (36), et qui est réalisée d'une manière telle que, à l'état arrimé de la tête de soudage par faisceau laser (48) à la broche (38), elle alimente la tête de soudage par faisceau laser (48) avec le faisceau laser à des fins de rechargement laser et avec la matière pulvérulente.

2. Machine-outil (20) selon la revendication 1, dans laquelle l'unité d'usinage mobile (32) est en outre réalisée d'une manière telle qu'une sonde de mesure peut venir s'y arrimer, sonde au moyen de laquelle on peut déterminer la forme réelle de la pièce (54) qui doit être restaurée et/ou dans laquelle l'unité d'usinage mobile (32) est en outre réalisée d'une manière telle qu'un outil de polissage destiné au polissage de la pièce (54) peut venir s'y arrimer.

3. Machine-outil (20) selon la revendication 1, comprenant en outre un magasin à outils (44) pour la réception d'au moins une tête de fraisage (40, 48) qui peut venir s'arrimer à l'unité d'usinage (32), en particulier d'une tête de fraisage, d'une tête de soudage par faisceau laser, d'une sonde de mesure et d'un outil de polissage, ainsi qu'une unité de remplacement d'outil (46) qui est réalisée d'une manière telle que la tête de fraisage (40, 48) respectivement requise peut être prélevée du magasin à outils (44), peut être déplacée en direction de l'unité d'usinage (32) et peut venir s'arrimer à cette dernière et/ou en ce que la tête de fraisage (40, 48) respectivement arrimée peut être, après son utilisation, désarrimée par rapport à l'unité d'usinage (32) et peut être réceptionnée, peut être déplacée dans la direction du magasin à outils (44) et peut y être déposée.

4. Machine-outil (20) selon l'une quelconque des revendications précédentes, présentant en outre une unité de commande qui est réalisée d'une manière telle qu'elle détermine, à partir des mesures de la pièce (54) prises par la sonde de mesure, la forme réelle de la pièce (54), qu'elle compare à une forme de consigne de la pièce (54) qui a été mise en mémoire, et qu'elle détermine, à partir de cette comparaison, des déviations, en particulier des zones dans lesquelles de la matière a été déposée en excès par rapport à la forme de consigne et des zones (60,62) dans lesquelles la matière fait défaut.

5. Machine-outil (20) selon la revendication 4, dans laquelle l'unité de commande est réalisée d'une manière telle qu'elle entraîne l'unité d'usinage (32), d'une manière telle qu'en utilisant la tête de fraisage (40), elle élimine de la matière aux endroits de la pièce où la matière dépasse la forme de consigne et qu'elle dépose de la matière, en utilisant la tête de soudage par faisceau laser (48) aux endroits où de la matière fait défaut et/ou, en utilisant la tête de fraisage (40) elle élimine à nouveau une quantité de matière excédentaire déposée et/ou en utilisant l'outil de polissage, elle soumet la pièce (54) à un polissage de finition.

6. Machine-outil (20) selon l'une quelconque des revendications précédentes, dans laquelle la tête de soudage par faisceau laser (48) présente un guidage optique qui peut venir s'accoupler au guidage optique de l'unité d'alimentation (50, 52) et à une optique de traitement et de focalisation, en particulier pour la formation de plusieurs faisceaux laser, en particulier cruciformes, ainsi qu'une alimentation de matière qui peut venir s'accoupler à l'alimentation de matière de l'unité d'alimentation et/ou dans laquelle la tête de soudage par faisceau laser (48) possèdent des dimensions qui sont inférieures à 80 x 85 x 250 mm.

7. Procédé destiné à une pièce (54) réalisée sous la forme d'une aube de turbine, d'une turbine ou d'un disque aubagé, présentant les étapes suivantes dans lesquelles :
on enserre une pièce usagée (54) entre deux mandrins (24, 28) opposés l'un à l'autre comprenant des éléments de serrage ; et
on arrime une tête (40) à la broche (38) d'une unité d'usinage (32), destinée à la réception d'une tête d'outil ;
dans lequel on met l'unité d'usinage (32) en mouvement en déplaçant un chariot Y (34) de l'unité d'usinage (32), par rapport au bâti de la machine (22) le long d'un axe Y orienté vers le haut et vers le bas ; en déplaçant un chariot Z (36), de l'unité d'usinage (32), par rapport au chariot Y (34) le long d'un axe Z orienté vers l'avant et vers l'arrière ; et en mettant en rotation la broche (38), qui est montée en rotation contre le chariot Z (36), autour d'un axe B qui est parallèle à l'axe Y du chariot Y (34) ;
**caractérisé**
**en ce que** le procédé est destiné à la restauration d'une pièce (54) réalisée sous la forme d'une aube de turbine usagée, d'une turbine usagée ou d'un disque aubagé ;
**en ce que** la tête arrimée représente une tête de fraisage (40) et la pièce (54), en particulier les zones de la pièce (54) dans lesquelles de la matière dépasse de la forme de consigne, est/sont enlevées par fraisage, par l'intermédiaire d'un déplacement des mandrins (24, 28) et de l'unité d'usinage (32) ; et
**en ce que** le procédé présente les étapes supplémentaires dans lesquelles :
on arrime une tête de soudage par faisceau laser (48) à la broche (38) d'une unité d'usinage (32), destinée à la réception de la tête d'outil et on dépose de la matière sur la pièce (54) par l'intermédiaire d'un rechargement laser, en particulier sur les zones de la pièce (54) dans lesquelles de la matière fait défaut, par l'intermédiaire d'un déplacement des mandrins (24, 28) et de l'unité d'usinage (32), de même que par l'intermédiaire d'une alimentation de la tête de soudage par faisceau laser (48) avec le faisceau laser pour le rechargement laser et avec la matière pulvérulente ; dans lequel l'unité d'usinage (32) présente une unité d'alimentation de matière et de faisceau laser (50, 52) pour la tête de soudage par faisceau laser (48), qui renferme une source de faisceau laser et un guidage optique pour le faisceau laser ainsi qu'une alimentation de matière et qui vient s'appliquer en particulier contre la broche rotative (38) ou contre le chariot Z (36).

8. Procédé selon la revendication 7, présentant en outre un arrimage de la tête de fraisage (40) et un enlèvement d'une matière déposée en excès, ainsi qu'un arrimage de l'unité de polissage et un polissage de finition de la pièce.

9. Procédé selon la revendication 7 ou 8, présentant en outre :
la détermination de la forme réelle de la pièce (54), en particulier l'arrimage d'une sonde de mesure à une unité d'usinage (32) et la détermination de la forme réelle de la pièce (54) par l'intermédiaire d'un déplacement des mandrins (24, 28) et/ou de l'unité d'usinage (32) ;
la comparaison de la forme réelle de la pièce (54) à une forme de consigne qui a été mise en mémoire ; et
la détermination de la déviation de la forme réelle de la pièce (54) par rapport à une forme de consigne connue, en particulier de zones dans lesquelles de la matière dépasse la forme de consigne et de zones (60, 62) dans lesquelles de la matière fait défaut.

10. Procédé selon l'une quelconque des revendications 7 à 9, présentant en outre, après l'étape de dépôt de matière sur la pièce (54) par l'intermédiaire d'un rechargement laser :
une nouvelle détermination de la forme réelle de la pièce (54), en particulier un arrimage d'une sonde de mesure à une unité d'usinage (32) et une détermination de la forme réelle de la pièce (54) par l'intermédiaire d'un déplacement des mandrins (24, 28) et/ou de l'unité d'usinage (32) ; une nouvelle comparaison de la forme réelle de la pièce (54) à une forme de consigne qui a été mise en mémoire ; et une nouvelle détermination de la déviation de la forme réelle de la pièce (54) par rapport à une forme de consigne connue, en particulier de zones dans lesquelles de la matière dépasse de la forme de consigne et de zones (60, 62) dans lesquelles de la matière fait défaut ; et/ou
un nouvel arrimage de la tête de fraisage (40) ou d'une tête de fraisage (40) à l'unité d'usinage (32) et un simple fraisage de la pièce (54) en particulier des zones de la pièce (54) dans lesquelles de la matière a été déposée d'une manière excessive par rapport à la forme de consigne, par l'intermédiaire d'un déplacement des mandrins (24, 28) et/ou de l'unité d'usinage (32) ; et/ou
un arrimage d'un outil de polissage, en particulier d'une brosse de polissage à l'unité d'usinage (32) et un polissage de finition de la pièce (54), par l'intermédiaire d'un déplacement des mandrins (24, 28) et/ou de l'unité d'usinage (32).

11. Procédé selon l'une quelconque des revendications 7 à 10, comprenant en outre le fait de :
procurer un magasin à outils (44) pour que vienne s'y loger au moins une tête de fraisage (40,48) qui peut venir s'arrimer à l'unité d'usinage (32), en particulier une tête de fraisage, une tête de soudage par faisceau laser, une sonde de mesure et un outil de polissage ; de même que
retirer la tête de fraisage (40, 48) respectivement requise hors du magasin à outils (44) avec l'unité de remplacement d'outil (46) ; déplacer la tête en question en direction de l'unité d'usinage (32) et arrimer la tête en question à ladite unité ; et/ou désarrimer la tête de fraisage (40, 48) respectivement arrimée, après son utilisation, par rapport à l'unité d'usinage (32) ; récupérer la tête en question ; la déplacer dans la direction du magasin à outils (44) et la déposer dans le magasin à outils (44) par l'intermédiaire de l'unité de remplacement d'outil (46).
